# EUROPEAN PATENT APPLICATION

(11) **EP 4 012 574 A1**
(43) Date of publication of application: **15.06.2022**
(21) Application number: 20213837.6
(22) Date of filing: 14.12.2020
(51) Int. Cl.: G06F 16/242

(54) **DEVICE AND METHOD OF CONFIGURING A TECHNICAL SYSTEM**

(71) Applicant: Siemens Industry Software Inc., Plano, TX 75024 (US)
(72) Inventor: Moeller, Thomas, 53919 Weilerswist (DE); Singh, Santosh Kumar, 411020 Pune (IN)
(74) Representative: Maier, Daniel Oliver

(57) **Abstract**

Device and method of configuring a technical system are disclosed. The method comprising: generating a configuration model (432) for technical system, wherein the configuration model (432) is generated from configuration criteria for the technical system and wherein the configuration model (432) represents the technical system as an information model and wherein the generating the configuration model (432) comprises: validating the configuration criteria (F) based on constraints associated with the technical system, wherein the configuration criteria are valid when none of the constraints, having a severity level greater than or equal to a threshold severity, are violated; identifying a maximum satisfiable rule set for the validated configuration criteria, wherein the maximum satisfiable rule set is either empty or comprises constraint rules and/or default rules, wherein the maximum satisfiable rule set is identified by: determining a minimum number of conflicting rules (330) to be removed to resolve conflicts with the validated configuration criteria, wherein the minimum number of conflicting rules are determined for rules ranked below the threshold severity; and removing at least one of the minimum number of conflicting rules (350) to generate the maximum satisfiable rule set.

## Description

The present invention relates to device and method of configuring a technical system. Particularly, the present invention relates to generating a configuration model for technical system.

Typically, a configuration model is an information model of a technical system. In the configuration model, the technical system may be depicted to adhere to certain constraints or rules. Defining the rules that control the set of values a user can chose from in order to configure a valid product plays a key role when setting up a configuration model for the technical system. Often a variety of rule types are supported by configuration devices/solvers. The variety of rule types define the relationship between the elements of the configuration model, e.g. dependency or incompatibility rules between two configuration settings.

With the ever-growing number of configuration features in the configuration models of a technical system it is necessary to define suitable default rules to design a user-friendly configuration solver. The intent of a default rule is to try for a good prediction of the user's choices of configuration options without limiting the flexibility to select from the full range of variability of the features of the technical system.

The more default rules a configuration solver has the easier it is for a user to setup a technical system configuration that is ready to validate, test, manufacture, or purchase. The quality of the user experience depends to a large degree on the ability of these default rules to successfully predict the user's preferences. Therefore, many product configuration models define default rules for most if not all configuration options. In many cases the assumed user preference for a given configuration option depends on selections made for other configuration options. It is therefore very common that multiple default rules derive different values for the same configuration option depending on the user's choices for other configuration options.

There are usually many conditions at which one or more default rules conflict with each other, one or more constraint rules, and/or one or more user selections. For example, when configuring a computer keyboard one default rule might select the keyboard layout (say QWERTY vs QWERTZ) based on the shipping address. While another default rule evaluates the billing address to suggest the keyboard layout. If the billing and shipping addresses differ the two default rules conflict with each other.

Often there are multiple conflicting rules that need to be resolved to generate the configuration model. Known approaches to solve configuration models with default rules include sequential processing and formal default logic. These known approaches have shortcomings as identified below.

In sequential processing the behavior of a default rule is defined by the combination of a) default rule formula and b) its relative position in a static sequence. This creates several secondary problems such as setting up a default rule is more difficult because the author needs to also keep its placement in view. The formula of a default rule and its relative position cannot be changed independently. With a growing number of default rules it is increasingly difficult to assess the exact behavior of a given Default Rule. An enormous amount of analysis and testing is often required. A single static sequence usually does not allow every default rule to achieve its best effect for every configuration criteria. Further, the large number of default rules and the complexity of their preconditions makes it is increasingly difficult to find one static sequence that can handle all scenarios in a one-pass sequence. In many cases the "one-pass" sequence does not exist. It is therefore common practice to keep looping over all default rules multiple times, which results in poor response times.

Formal default logic is a non-monotonic logic and defines a Default Assumption to comprise of 3 elements: a precondition, one or more justification conditions, and a conclusion condition. This creates two problems: first formal default logic is not supported in declarative constraint/configuration solvers. Second, an algorithm implementing the formal default logic is often super-exponentially scaled. Evaluating all "default extensions" has factorial scalability and is therefore very quickly unusable.

Therefore, devices and methods of generating a configuration model can benefit from improvements. Particularly, the configuration devices/solvers may benefit from higher reliability with lower computational effort.

In an example a method of configuring a technical system is disclosed. The method comprising: generating a configuration model for technical system, wherein the configuration model is generated from configuration criteria for the technical system and wherein the configuration model represents the technical system as an information model and wherein the generating the configuration model comprises: validating the configuration criteria based on constraints associated with the technical system, wherein the configuration criteria are valid when none of the constraints, having a severity level greater than or equal to a threshold severity, are violated; identifying a maximum satisfiable rule set for the validated configuration criteria, wherein the maximum satisfiable rule set is either empty or comprises constraint rules and/or default rules, wherein the maximum satisfiable rule set is identified by: determining a minimum number of conflicting rules to be removed to resolve conflicts with the validated configuration criteria, wherein the minimum number of conflicting rules are determined for rules ranked below the threshold severity; and removing at least one the minimum number of conflicting rules to generate the maximum satisfiable rule set.

Another example is a device configuring a technical system comprising: a processor; a memory communicatively coupled to the processor, the memory comprising a configuration generation module configured to generate a configuration model of the technical system, wherein the configuration model represents the technical system as an information model comprising constraints arrangeable based on the severity level according to one or more method steps disclosed herein.

A further example may include a non-transitory computer readable medium encoded with executable instructions (such as a software component on a storage device) that when executed, causes at least one processor to carry out this described method.

The present invention advantageously addresses ever-increasing pressure to offer greater choice and variety in technical systems/products to meet end user expectations. The device according to the present invention enables manufacturers to specialize a product/technical system to the specific needs of their customer. The configure-to-order approach, which brings product specialization closer to the customer, is managed with reliability. Unlike known processes, where configure to-order can overwhelm resources with duplicated data that can introduce errors into product development. The present invention proposes a method that delivers variant management that makes certain that conflicts in the configuration criteria are resolved reliably and consistently.

As used herein "technical system" refers to a product that is configured using a configuration solver or a configuration device or a configuration software implemented on a computing device. For example, the technical systems or products may be automobiles, a drilling machines, shoes, beverages, computing devices, keyboards, etc. The present invention is not limited by the aforementioned examples. In an embodiment, the technical system is represented as an information model using the configuration model and wherein the technical system is configured to comprise constraints arrangeable based on the severity level. The technical system is often engineered using the configuration devices based on the constraints. The engineering complexity may drastically increase as the technical systems become more complex, product cycle times become shorter, markets and manufacturing go global and customers demand more choices and customization. The present invention provides a reliable method to resolve conflicts while configuring the technical system.

As used herein "configuration model" refers to an information model that represents a physical technical system in a digital form. For example, the configuration model includes definition of each feature of the technical system as datapoints that may be cross referenced to build the configuration model. In an embodiment, the technical system may be represented as constraints. As used herein "constraints" refer to the boundary conditions that are associated with the technical system. For example, considering a keyboard the constraint may include layout of the keyboard based on the language of the user. In another example, permitted emission norms act like constraints to configuration of an automobile.

As used herein "configuration criteria" refers to a criteria that may be input by a user. The configuration criteria may also be derived from preference/customization requests provided by a user. The configuration criteria are validated/checked whether any constraints of the technical system are violated. If yes, the configuration criteria are validated by checking if the violation is with regard to a constraint having a severity level greater than a threshold severity. As used herein "threshold severity" refers to a user definable threshold severity. Accordingly, a user defines whether a configuration criteria are valid or not by setting the threshold severity.

The method of configuring the technical system includes generating the configuration model. Accordingly, the physical technical system can be configured and tested using an information model. The configuration model is generated from the configuration criteria after it is validated and when a maximum satisfiable rule set is identified.

The method accordingly includes validating the configuration criteria based on constraints associated with the technical system, wherein the configuration criteria are valid when none of the constraints, having a severity level greater than or equal to a threshold severity, are violated.

In an embodiment, the configuration criteria are checked for satisfiability against all the constraint(s) in an input constraint list which have a severity level equal to or greater than the threshold severity. In an example, the validity check may result one of the three outcomes i.e. Satisfied, Unsatisfied and Unknown. The present invention addresses the result when the validity check is satisfied. Accordingly, the present invention is directed towards conflicts in constraints having severity lower than the threshold severity. By validating the configuration criteria, the present invention streamlines the effort in identifying conflicts and is directed to customer preferences that do not conflict with any constraint having a severity level that is equal to or greater than the threshold severity level.

The method also includes identifying a maximum satisfiable rule set for the validated configuration criteria, wherein the maximum satisfiable rule set is either empty or comprises constraint rules and/or default rules. The present invention advantageously identifies the maximum satisfiable rule set for the generation of the configuration model. Therefore, this ensures that only a minimum number of rules that most definitely cannot be satisfied are removed from the rule set during conflict resolution. The technical effect achieved is reliability and consistency in identifying the maximum satisfiable rule set. The present invention ensures that for the same configuration criteria input by two different users for the same technical system the same maximum satisfiable rule set is achieved. Particularly, in the present invention reliability and consistency are achieved without being dependent on conflict analysis capabilities in the underlying configuration/constraint solver. These capabilities are known to be computationally expensive and their specific results typically depend on a random seeding. Thereby, advantageously reducing the computation costs.

Further, the maximum satisfiable rule set is needed to infer choices for options that are not provided in a (user) input. The technical effect achieved is to the ability to derive complete and unique configuration criteria for all or as many different (user) inputs as possible. The more rules that are retained (and still be "valid") the higher the likelihood that a complete and unique configuration criteria can be achieved.

To identify the maximum satisfiable rule set, the method includes determining a minimum number of conflicting rules to be removed to resolve conflicts with the validated configuration criteria, wherein the minimum number of conflicting rules are determined for rules ranked below the threshold severity; and removing at least one the minimum number of conflicting rules to generate the maximum satisfiable rule set.

In an embodiment, a set of rules are associable to the validated configuration criteria, wherein each of the set of rules are assigned a severity level and a sequence number and wherein the severity level and the sequence number define a ranking level for each of the rules. In the present invention, constraints with severity level below the threshold severity are ranked based on the ranking level. For example, the conflict resolution may be executed separately for each ranking level or across the ranking levels. In an embodiment, the method may include associating each rule in the set of rules with the ranking level, wherein the ranking level of a specific rule is higher when the severity level is higher and wherein when the severity level is the same, the ranking level of the specific rule is based on the sequence number. Using the ranking levels, the present invention advantageously reduces rule complexity and maintenance effort. Further, the ranking levels increase the testability of the set of rules and thereby the maximum satisfiable rule set and in consequence the configuration model of the technical system. In addition, the ranking levels enable scalability when new rules or updates to the existing set of rules are performed.

In an embodiment, the method may include identifying unwanted rules from the set of rules. The unwanted rules can either be inactive, redundant, overruled, unjustified or inconsistent constraints. Further, the method may include removing rules in the set of rules when categorized based on a predefined category, wherein the predefined rule type comprises at least one of inconsistent, inactive, redundant, overruled and unjustified.

In an embodiment, the method may include identifying conflicts in rules within each of the ranking level and across the ranking levels; determining the minimum number of conflicting rules as rules with lowest ranking level when conflicts across the ranking levels are identified; and removing at least one the minimum number of conflicting rules. The present invention identifies conflicts that are both within a specific ranking level and across the ranking levels. By separating the rules into ranking levels, different methods for identifying the minimum number of conflicting rules to be removed. For example, when there is conflict across the ranking levels, the minimum number of conflicting rules in the lowest ranking level is one and the same is removed. However, if there are more than one conflicting rules in the lowest ranking level, the present invention advantageously identifies which of the one or more conflicting rules to remove to generate the maximum satisfiable rule set.

Further, by identifying conflicting rules within the specific ranking level, the present invention provides for a scenario where the ranking levels may not be defined. Alternatively, same ranking levels may be defined to one or more rules in the set of rules. The present invention provides a method to identify conflicts within a specific ranking level. Therefore, a user may not need to spend any effort in defining ranking levels, severity levels or sequence numbers.

In an embodiment, the method includes determining the conflicting rules based on the minimum number of the conflicting rules (n) to remove from within the specific ranking level to resolve all conflicts within the specific ranking level and/or ranking levels higher than the specific ranking level, determining one or more combinations of the conflicting rules within the specific ranking level, wherein each of the one or more combinations include the minimum number of conflicting rules (n) and wherein removal of each of the combinations results in resolution of all the conflicts; and identifying a combination of the combinations to be removed using a chain representation of the one or more combinations, wherein the (one) combination to be removed is identified as end points of the chain representation.

The method may accordingly also include generating the chain representation of the combinations to determine the (one) combination that is to be removed. Generating the chain representation may depend on the assumption that the default rules are "Normal Default Rule". A person skilled in the art would appreciate that a default rule is considered as a "Normal Default Rule" when it has only one justification expression and the justification expression is the same as the conclusion expression. The present invention intelligently arranges the combination of the conflicting rules to consistently identify the one combination that needs to be removed. Identifying consistently which of the multiple conflicting rules to remove is important considering a technical system typically has a large number of constraints and the configuration criteria when validated may still result in several conflicting rules.

In an embodiment, the minimum number of conflicting rules to remove from within the specific ranking level is referred to as cardinality. Accordingly, the present invention may include determining a cardinality of conflicting rules within the specific ranking level, wherein the cardinality specifies the number of independent conflicts in the rules within the specific ranking level and wherein the minimum number of the conflicting rules that must be removed is the cardinality. Therefore, the present invention determines the cardinality "X" by determining the minimum number of conflicting rules that need to be dropped for the validated configuration criteria to be conflict free or to become satisfiable. In an example, the determination of cardinality may be implemented as a cardinality constraint that is constructed based on pseudo-Boolean functions and is satisfied only if the validated configuration criteria violates no more than X constraints. For example, the cardinality X constraint can be used in a binary search algorithm, which allows for an efficient way to identify the minimum number of conflicting rules to remove to make validated configuration criteria conflict free.

In an embodiment of the present invention, the rules with highest ranking level below the threshold severity is processed first. If the rules in the ranking level conflict with the rule above the ranking level, the conflicting constraints are removed, and remaining constraints are promoted to the high severity constraint list; otherwise all constraints in the current constraint set are promoted to the high severity constraint list. Then the rules with the next lower ranking level are processed. Therefore, the present invention iteratively ensures that the validated configuration criteria are conflict free.

In another embodiment, the method may include identifying a next threshold ranking based on an interval search, wherein the next threshold ranking is identified as a highest ranking level below a current threshold ranking at which a conflict is identified, wherein the minimum number of conflicting rules are determined for the current threshold ranking and wherein ranking levels above the current threshold ranking are free of conflicts. As indicated above, the present invention iteratively identifies conflicts within the rules associated with the validated configuration criteria and resolves them systematically. The systematic conflict resolution enables a user to track the manner in which the present invention has resolved the conflicting rules and thereby making the method consistent and reliable. In addition, this enables the method to be applied incrementally to leverage results of previous operations.

In an embodiment, there may be new rules or updates to the set of rules associated with the validated configuration criteria. In an embodiment, the method manages/adapts to the new rules or updates by determining the ranking level for the updated set of rules; and identifying the maximum satisfiable rule set for valid configuration criteria associated with the updated set of rules based on the steps discussed herein above.

The present invention proposes a method and device for identifying rules that conflict with the configuration criteria that may be input by a customer. Further, the present invention proposes a methodology to decide consistently and repetitively which of the conflicting rules to drop in order to resolve all conflicts identified. Further, the present invention optimizes the number of conflicting rules to be dropped by narrowing it to the minimum number of conflicting rules that need to be dropped. The present invention minimizes the effort to maintain the ranking and also minimizes the effort to maintain and test the impact of rule updates. Furthermore, the present invention achieves the aforementioned advantages without evaluating all "default extensions" in an algorithm that has factorial scalability. In addition, the ranking levels make the present invention easy to implement, scale and test.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates a method of configuring a technical system, according to an embodiment of the present invention;
- Fig. 2: illustrates a method of evaluating ranking of a set of rules, according to an embodiment of the present invention;
- Fig. 3: illustrates a chain representation for identifying a combination of conflicting rules to be removed, according to an embodiment of the present invention; and
- Fig. 4: illustrates a device for configuring a technical system, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

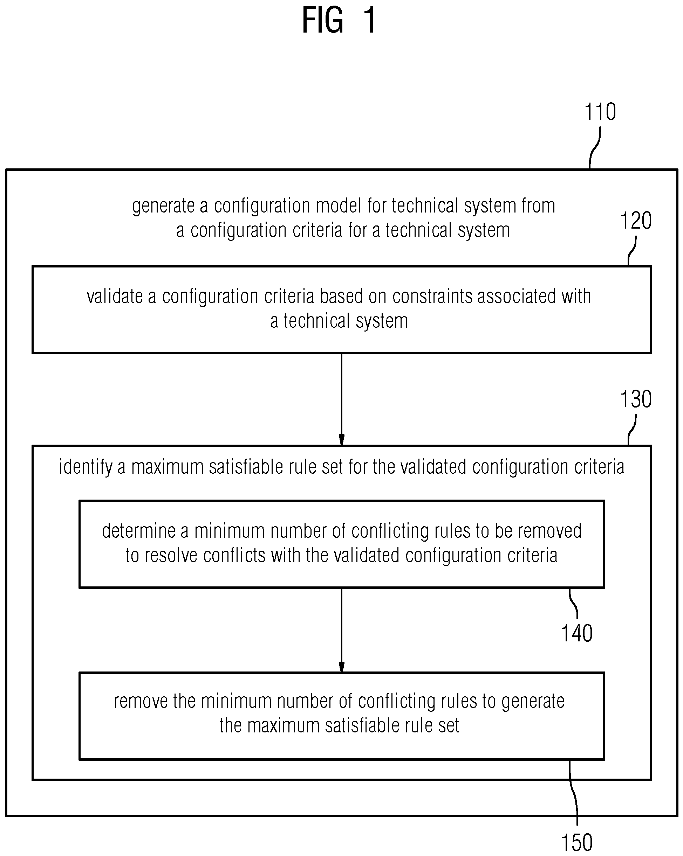

Fig. 1 illustrates a method of configuring a technical system, according to an embodiment of the present invention. The method of configuring the technical system starts at step 110 by generating a configuration model for the technical system from a configuration criteria. In an embodiment, step 110 may include receiving the configuration criteria input by a user. The step 110 includes multiple intermediate steps 120 and 130.

At step 120 the configuration criteria are validated based on constraints associated with the technical system. At step 120 the configuration criteria is checked to determine whether the constraints, having a severity level greater than or equal to a threshold severity, are violated. Accordingly, the configuration criteria is validated only when none of the constraints having the severity level greater than or equal to threshold severity. The validated configuration criteria may be associated with a set of rules are associable. Each rule in the set of rules are assigned the severity level and a sequence number. The severity level and the sequence number define a ranking level for each of the rules. In an embodiment, at step 120 each rule in the set of rules are associated with the ranking level. The ranking level of a specific rule is higher when the severity level is higher. If the severity level is the same the ranking level depends on the sequence number.

In an embodiment, the validation can result in three outcomes Satisfied, Unsatisfied and Unknown. When the outcome is Satisfied, the input expression is satisfiable and execution control can advance to next step of processing to deal with conflicts in rules below the threshold severity. When the outcome is Unsatisfied, the input configuration criteria is determined as unsatisfiable. The configuration solver implementing the method notifies the user/customer the Unsatisfied outcome along with reason for the unsatisfied verdict. When the outcome is Unknown, a user is notified that the following scenarios have resulted in the Unknown outcome:
a. Non-linear integer arithmetic
b. Quantifiers, e.g. "for each" (V), or "there exists some" (∃)

The method step 110 proceeds from step 120 to 130 only when the outcome is Satisfied.

At step 130 a maximum satisfiable rule set for the validated configuration criteria is identified. The maximum satisfiable rule set can be empty or may include constraint rules and/or default rules. In an embodiment, the maximum satisfiable rule set is identified by removing unwanted constraints with a predefined category such as Inactive, Redundant, Overruled and Unjustified.

Inactive rule category: inactive rules are processed by processing the applicability condition of a rule. If the majority of default rules have an applicability condition that combine values of the same family a significant performance gain is achieved by splitting all applicability conditions into their respective implicant expressions. It is a common practice that default rules combine one or more product model expression, e.g. "Model = Coupe OR Model = Sport or Model = Sedan". This way hundreds of different Default Rules may use a small amount of unique implicant expressions. Each implicant expression is tested for satisfiability against rules above the threshold severity.
1. Inactive rule category: The constraint is declared Inactive if all its implicant expressions are Unsatisfiable. Consider the below example:
   Models: M1, M2, M3, M4
      A: A1, A2, A3, A4
      B: B1, B2, B3, B4
   Rules:
      A1 is available to M1, M2
      B1 is available to M1, M2
   Default Rule:
      D1: M1 | M2 defaults A1
      D2: M3 | M4 defaults B4
   In the above example, default rule D2 is detected as inactive because the implicants of its applicability condition, M3 as well as M4 are Unsatisfiable against the rule set: B4 is neither available to M3 nor M4.
2. Redundant rule category: This category of rules identifies the rules within the threshold severity that try to assert a Boolean expression which is already asserted by the other high severity constraints.
   For example, consider the following:
   Models: M1, M2, M3, M4
      A: A1, A2, A3, A4
      B: B1, B2, B3, B4
   Rules:
      A1 is available to M1, M2
      B1 is available to M1, M2
   Include rule:
      R1: M1 | M2 includes A1 & B1
   Default Rule:
      D1: M1 | M2 defaults A1
      D2: M3 | M4 defaults B4
   In the above example, D1 is a redundant rule in presence of rule R1. Assuming that a rule has the form "A→B", the expression A&∼B is tested for satisfiability to check redundancy of the rule where A is applicability and B is the subject of the rule.
3. Overruled rule category: This category identifies rules whose subject is overruled by rules having severity level greater than and equal to the threshold severity. Consider the below data scenario:
   Models: M1, M2, M3, M4
      A: A1, A2, A3, A4
      B: B1, B2, B3, B4
   Rules:
      A1 is available to M1, M2
      A2 is available to M1, M2
      B1 is available to M1, M2
      B2 is available to M1, M2
   Include rule:
      R1: M1 | M2 includes A1 & B1
   Default Rule:
      D1: M1 | M2 defaults A2
      D2: M3 | M4 defaults B2
   In the above example, high severity R1 rule overrules the default rule D1 and D2. To check for satisfiability, (∼A | B) expression is tested for satisfiability.
4. Unjustified rule category: Rules in this category are denied by rules having severity level greater or equal to the threshold severity. The expression that is checked for testing whether a constraint is Unjustified is (A & B), where "A" is applicability and "B" is subject. Depending on how the user continues with the refinement of the technical system (product) configuration criteria Unjustified default constraints either become Overruled (if the user continues with selecting A), or Redundant (if the user continues with selecting Not(A)).

In an embodiment, the step 130 is performed when the rule with the highest ranking level (below the threshold severity) has a conflict. At step 130, the highest ranking level is identified using a partition search. A partition search is an operation for finding the conflicting rules in the set of rules that are ranked from the highest ranking level to the lowest ranking level. Once ranked set of rules are divided into halves and the rules in the first half are checked for conflicts. If no conflict is found, then the second half is evaluated for conflicts.

The step 130 includes intermediate steps 140 and 150. At step 140 a minimum number of conflicting rules to be removed are determined to resolve conflicts with the validated configuration criteria. At step 150 the minimum number of conflicting rules are removed to generate the maximum satisfiable rule set.

In an embodiment, step 130 includes identifying conflicts in rules within each of the ranking level and across the ranking levels. If the conflicts are identified across the ranking levels then the step 130 includes determining the minimum number of conflicting rules as rules with lowest ranking level when conflicts across the ranking levels are identified; and removing the minimum number of conflicting rules.

In another embodiment, step 130 address a scenario where there are no ranking levels assigned or all the conflicts are within a specific ranking level.

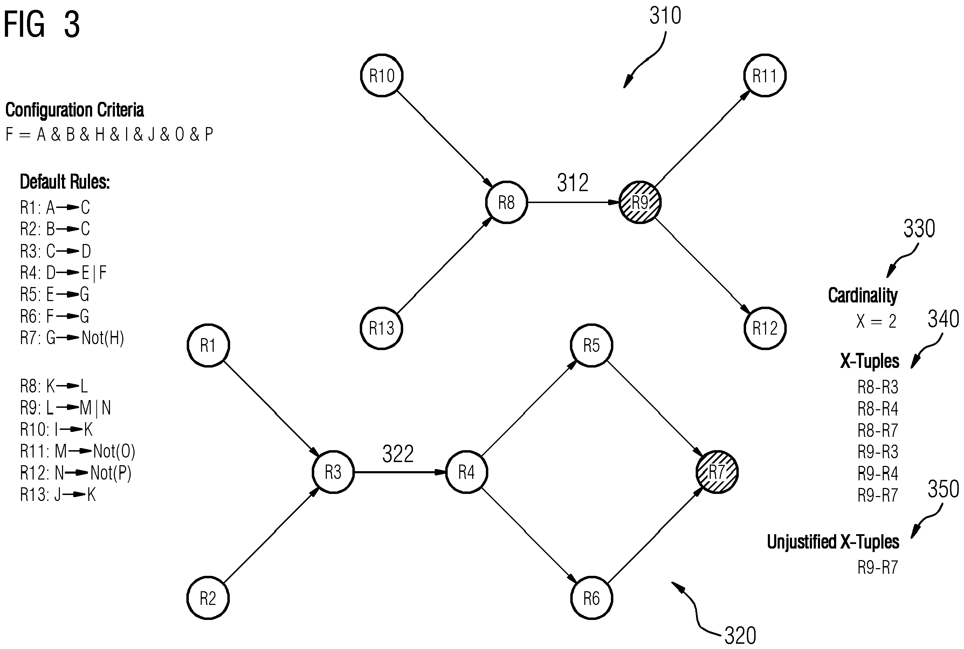

Accordingly, step 130 may include determining the conflicting rules based on the minimum number of the conflicting rules. The identified conflicting rules would resolve all conflicts within the specific ranking level and/or ranking levels higher than the specific ranking level, if removed. Step 130 may include determining one or more combinations of the conflicting rules within the specific ranking level. Each of the one or more combinations include the minimum number of conflicting rules (n) and wherein removal of each of the combinations results in resolution of all the conflicts. For example, if the minimum number of conflicting rules are determined as 2, then combination with 2 conflicting rules are determined. Each of those combinations resolve conflicts if removed. The step 130 identifies which of the multiple combinations to remove by using a chain representation of the one or more combinations. The combination to be removed is identified as end points of the chain representation. A detailed description of the chain representation is provided hereinafter in Fig. 3.

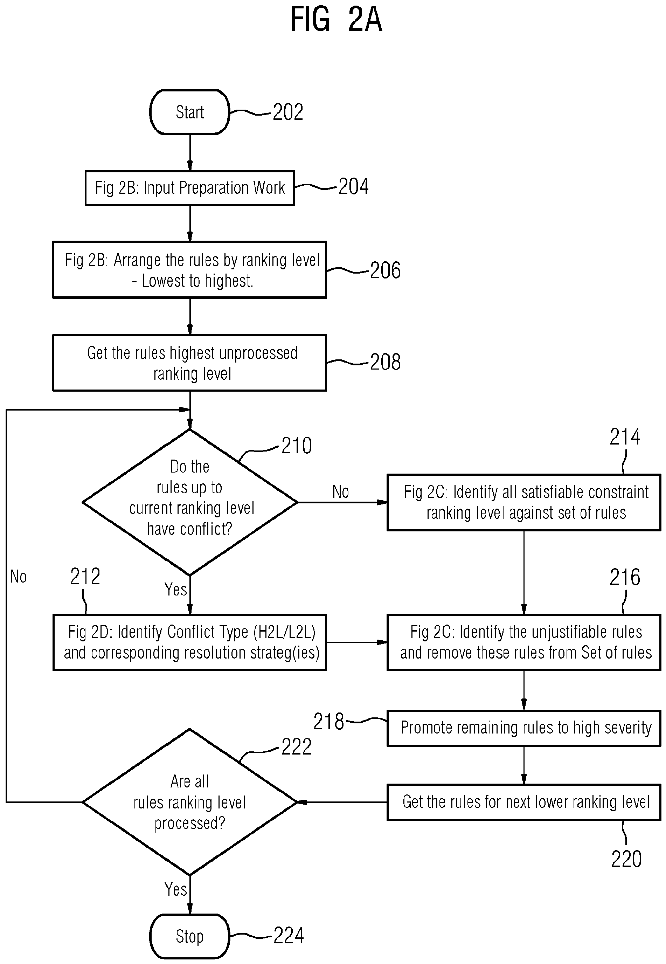

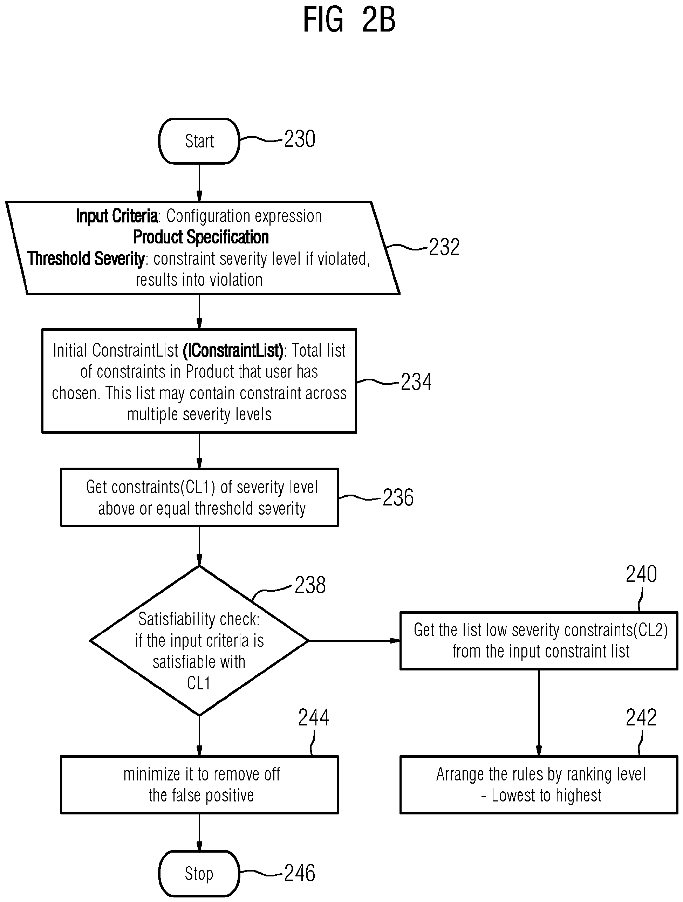

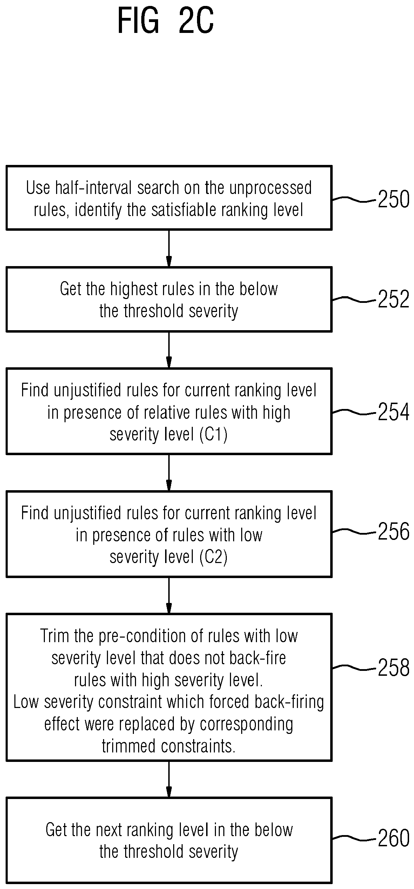

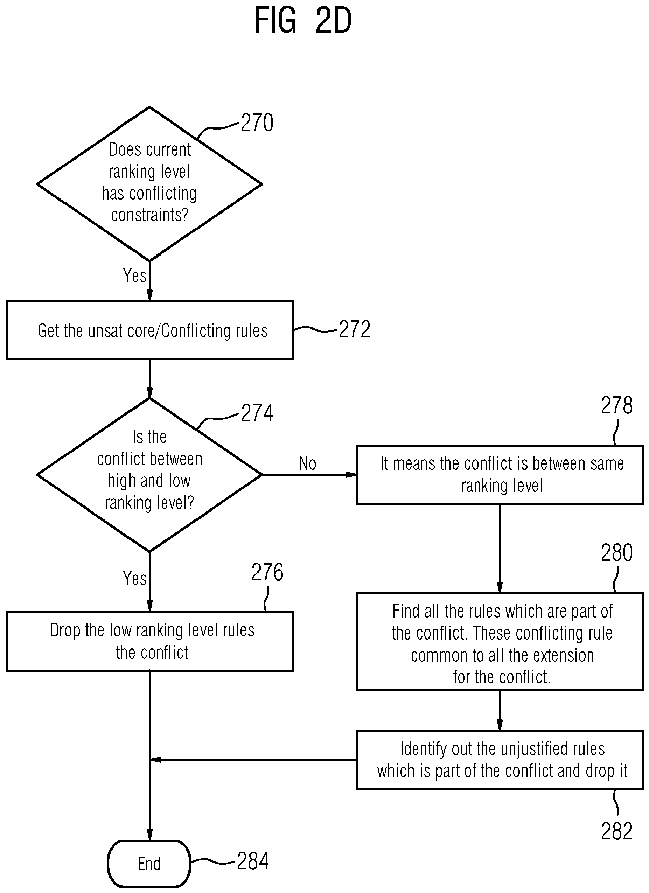

Fig. 2 illustrates method of evaluating ranking of a set of rules and generating the maximum satisfiable rule set, according to an embodiment of the present invention. The maximum satisfiable rule set is used to generate a configuration model, which is in turn used to configure a product. The method is broken down into sub-methods as illustrated in the flowcharts 2A, 2B, 2C and 2D.

As shown, the method is captured in flowchart 2A which cross references the flowcharts 2B, 2C and 2D. The method starts at steps 202 with the initialization of the constraint solver module in a device. At step 204, the flowchart 2B is referenced to obtain the preparation work. Further at step 206, the flowchart 2B is referenced to get an arranged set of rules associated with a configuration criteria of a product.

To explain steps 204 and 206, flowchart 2B is referred. The flowchart 2B begins with step 230 with the initialization of the preparation module. At step 232, the configuration criteria is received or determined. In an embodiment, the configuration criteria is a configuration expression input by a user/customer. Further, at step 232, the product specification of the product. Furthermore, a threshold severity is obtained from the user.

At step 234, the configuration criteria is validated based on the list of constraints in the product. The list of constraints may be associated with multiple severity levels. In other words, the constraint list may contain constraint across multiple severity levels. At step 236, the constrains (CL1) with severity level above or equal to the threshold severity are fetched. At step 238 a satisfiability check is performed for the input criteria (i.e. the configuration criteria) and the constraints (CL1) with severity level greater or equal to the threshold severity.

If the configuration criteria does not violate the constraints (CL1) with severity level greater or equal to the threshold severity, then step 240 is performed. At step 240, the constraints below the threshold severity are obtained from the constraint list of the product. The constraints below the threshold severity are associated with a set of rules including either constraint rules or default rules. At step 242, the rules in the set of rule are arranged by a ranking level. The ranking level is a combination of the severity level and a sequence number associated with the rules.

If the configuration criteria violates the constraints (CL1) with severity level greater or equal to the threshold severity, then step 244 is performed. At step 244, the configuration criteria and the constraints are analyzed and the violation is explained to the user.

Referring back to flowchart 2A, after step 206, the configuration criteria is validated and the rules are arranged according to the ranking level. At step 208, the rules with highest unprocessed ranking level, below the threshold severity, are obtained. At step 210, a check is performed to determine whether the rules up to the highest unprocessed ranking level have conflicts. As used herein "unprocessed" refers to whether a check for conflict has already been conducted or not.

If there are no conflicts in the rules up to the highest unprocessed ranking level, step 214 is performed. At step 214 and 216, flowchart 2C is referenced. At step 214, the rules that are satisfied/satisfiable are identified in the set of rules. At step 216, the unsatisfiable rules are identified and removed from the set of rules. At step 218, the rules remaining in the set of rules are promoted to high severity level i.e. above the threshold severity.

The steps 214 and 216 can be further detailed by referring to flowchart 2C. The flowchart 2C begins at step 250 by using half interval search on the unprocessed rules to identify the satisfiable rules and the ranking levels with no conflict. Accordingly, step 250 identifies the ranking level at which a conflict is determined (conflict level). At step 252, the highest ranked rules (i.e. rules with the highest ranking level) below the threshold severity are obtained.

At step 254, the rules in (relatively) high severity level/ranking level are identified if they are unjustified in view of the rules in the current ranking level. At step 256, check if there exists rules between (between level) the current ranking level and the conflict level, because of which a rule in the current ranking level becomes unjustified. At step 258, pre-conditions of rules with in the between level are trimmed such that they do not cause any rule to become unjustified. Further, the rules in the between level are replaced by the trimmed rules. At step 260, the next ranking level is analyzed to identify the unjustified rules. The iterative nature of the present invention ensures that conflicts are thoroughly identified.

Referring back to flowchart 2A, the method also provides a solution when conflicts are identified within a ranking level or across ranking levels. The flowchart 2D is referenced to identify and resolve such conflicts.

The flowchart 2D starts at step 270 with the determination of whether ranking levels below the threshold severity has conflicting rules. At step 272, the conflicting rules are fetched. At step 274, a determination of whether the conflict is in rules between high and low ranking levels, i.e. across one or more ranking levels. If yes, then step 276 is performed to drop the rules in the low ranking level to resolve the conflicts. If no, then the conflict is within the ranking level and the same is identified at step 278. Further, at step 278, a cardinality for the conflicting rules is determined. Furthermore, based on the cardinality (X) one or more combinations (i.e. X-tuples) are identified, wherein removal of any one of the combinations resolves conflicts.

At step 280, all the rules which are part of the conflict are identified. Additionally, the conflicting rules common to all extensions of the conflict (as shown in Fig.3 arrow 312 and 322) are identified. At step 282, the unjustified rules among the conflicting rules are identified and removed. The method of identifying the conflicting rules to remove within the specific ranking level is explained in Fig.3. Further, step 282 includes removing rules in the set of rules when categorized as one of inactive, redundant, overruled and unjustified.

At the end of flowchart 2D, the conflicting rules are removed and satisfiable rule set can augmented with the remaining rules. At the last iteration, the satisfiable rule set becomes the maximum satisfiable rule set. Accordingly, flowchart 2D connects to flowchart 2C at step 254 (as shown flowchart 2A). A person skilled in the art would appreciate that the conflict level identified in step 250 is processed in flowchart 2D. Alternatively, the conflict level may be the highest unprocessed ranking level determined at step 210.

Referring back to flowchart 2A, at step 220, the rules for the next lower ranking level (below the threshold severity) are identified. The rules for the next ranking level is checked for conflicts (i.e. processed). At step 222, a determination is made as to whether all the rules in the ranking levels are checked. If yes, the method ends at step 224 and the maximum satisfiable rule set is output. If no, the method is iteratively performed till all the rules in the ranking levels are processed.

Fig. 3 illustrates chain representations 310 and 320 for identifying a combination 350 of conflicting rules to be removed, according to an embodiment of the present invention.

The chain representations 310 and 320 are built when conflicts are identified in the default rules R1 to R13. The default rules are associated with the configuration criteria F. As indicated the configuration criteria F = A&B&H&I&J&O&P Default Rules are as follows:
R1: A→C
R2: B→C
R3: C→D
R4: D→E | F
R5: E→G
R6: F→G
R7: G→Not (H)
R8: K→L
R9: L→M|N
R10: I→K
R11: M→Not (O)
R12: N→Not(P)
R13: J→K

The configuration criteria F is analyzed to determine that the cardinality 330 "X"=2 independent number of conflicts. The combination of the conflicts and the sequence are shown as disjunctive chain representations 310 and 320 of the default rules. Each chain representation 310 and 320 has 4 unique constraint paths. Each path represents a different minimal number of conflicting rules for the corresponding conflict. Constraints that are common to all minimal conflicting rules in a given chain representation 310, 310 are indicated by arrows 312 and 322, respectively.

A binary search using a "Cardinality X" constraint that searches for the cardinality 330 identifies a cardinality of X=2 for this scenario because there are X=2 independent conflicts and each needs to be resolved by removing (at least) one violated constraint in each disjunctive chain for F to become satisfiable. This step scales with Log(n) where n is the size of the set of rules. During implementation the response time of the binary search for the cardinality 330 can be improved based on heuristics. For example, if X is expected to be small compared to n it seems advantageous to begin with a 90:10 interval search (probing for X=n/10) as opposed to blindly using a Half-Interval Search with 50:50 intervals (probing for X=n/2).

The cardinality 330 is used enumerate all combinations 340 i.ee. X-tuples (2-tuples in this case) of constraints for which the "Cardinality X" constraint is satisfiable. The first combination is a byproduct of the previous binary search. To find the next combination an additional rule can be added that disallows the selection of the same X-tuple in the next check satisfiability determination with the "Cardinality X" constraint for X=2, until the configuration solver can no longer find a new solution that satisfies the "Cardinality X" constraint.

The next step determines which combination from the combinations 340 to filter out. In an embodiment, a new rule set may be generated that contains all the conflicting rules that appear in any combination. These rules are then analyzed till no more justified rules are found. Accordingly, when there are no more justified rules in the new rule set the remaining rules are unjustified. They form the one combination 350 to remove.

As used herein "justified" refers to an implication that the rules have an entailed precondition and a satisfiable THEN condition. Further, "unjustified" refers to an implication that a given rule has an unsatisfiable combination of precondition and justification condition. To generate the minimum satisfiable rule set, each of the rules in the minimum satisfiable rule set must be justifiable.

The example in Fig. 3 relates to a technical system. The configuration criteria F and the configuration features A-P relate to features of a given technical system. For example, the technical system is an automotive truck. The configuration features of the automotive truck are listed below.

| Configuration Option | Description |
|---|---|
| A | RESTRAINT PROVISIONS CHILD, REAR SEAT, REAR FACING |
| B | RESTRAINT SYSTEM SEAT, INFLATABLE, DRIVER & PASS, FRONT & SEAT SIDE |
| C | ROLLOVER BAR |
| D | ROADSIDE ASSISTANCE PACKAGE |
| E | DRIVER INFORMATION CENTER KIT |
| F | RADIO KIT, NAVIGATION |
| G | ENTERTAINMENT PKG REAR SEAT, SINGLE DISPLAY |
| H | ADDITIONAL DVD SCREEN |
| I | COOLING SYSTEM HEAVY DUTY |
| J | PROVISIONS SNOW PLOW PREP |
| K | PERFORMANCE PACKAGE HIGHER PAYLOAD |
| L | LEVEL CONTROL AUTO, AIR, HEAVY DUTY |
| M | TRAILER HITCH WEIGHT DISTRIBUTING PLATFORM |
| N | SWAY CONTROL HITCH |
| O | COVER TRAILER HITCH RECEIVER |
| P | LOCKING PIN, TRAILER HITCH |

With these definitions the configuration formula "F= A&B&H&I&J&O&P" maps to:
Restraint Provisions Child, Rear Seat, Rear Facing AND Restraint System Seat, Inflatable, Driver & Pass, Front & Seat Side AND Additional Dvd Screen AND Cooling System Heavy Duty AND Provisions Snow Plow Prep AND Cover Trailer Hitch Receiver AND Locking Pin, Trailer Hitch

The Rules R1, R2, ..., R12, R13 map to the following default Rules for the automotive truck:

| | | | |
|---|---|---|---|
| Default | If | Then | Alternative |
| Rule | | | |
| R1 | Restraint provisions child, rear seat, rear facing | Rollover bar | |
| R2 | Restraint system seat, inflatable, driver & pass, front & seat side | Rollover bar | |
| R3 | Rollover bar | Roadside assistance package | |
| R4 | Roadside assistance package | Driver information center kit | RADIO KIT, NAVIGATION |
| R5 | Driver information | Entertainment | |
| | center kit | pkg rear seat, single display | |
| R6 | Radio kit, navigation | Entertainment pkg rear seat, single display | |
| R7 | Entertainment pkg rear seat, single display | Not: additional dvd screen | |
| R8 | Performance package higher payload | Level control auto, air, heavy duty | |
| R9 | Level control auto, air, heavy duty | Trailer hitch weight distributing platform | SWAY CONTROL HITCH |
| R10 | Cooling system heavy duty | Performance package higher payload | |
| R11 | Trailer hitch weight distributing platform | Not: cover trailer hitch receiver | |
| R12 | Sway control hitch | Not: locking pin, trailer hitch | |
| R13 | Provisions snow plow prep | Performance package higher payload | |

The method according to the present invention would consistently choose to drop R7 and R9 for the configuration criteria F.

Accordingly, the configuration model is generated from the maximum satisfiable rule set that includes rules associated with the following configuration features
Restraint Provisions Child, Rear Seat, Rear Facing AND Restraint System Seat, Inflatable, Driver & Pass, Front & Seat Side AND Rollover Bar AND Roadside Assistance Package AND choice of: (driver information center kit) or (radio kit, navigation) AND Entertainment Package Rear Seat, Single Display AND Additional DVD Screen AND Cooling System Heavy Duty AND Provisions Snow Plow Prep AND Cover Trailer Hitch Receiver AND Locking Pin, Trailer Hitch AND Performance Package Higher Payload AND Level Control Auto, Air, Heavy Duty

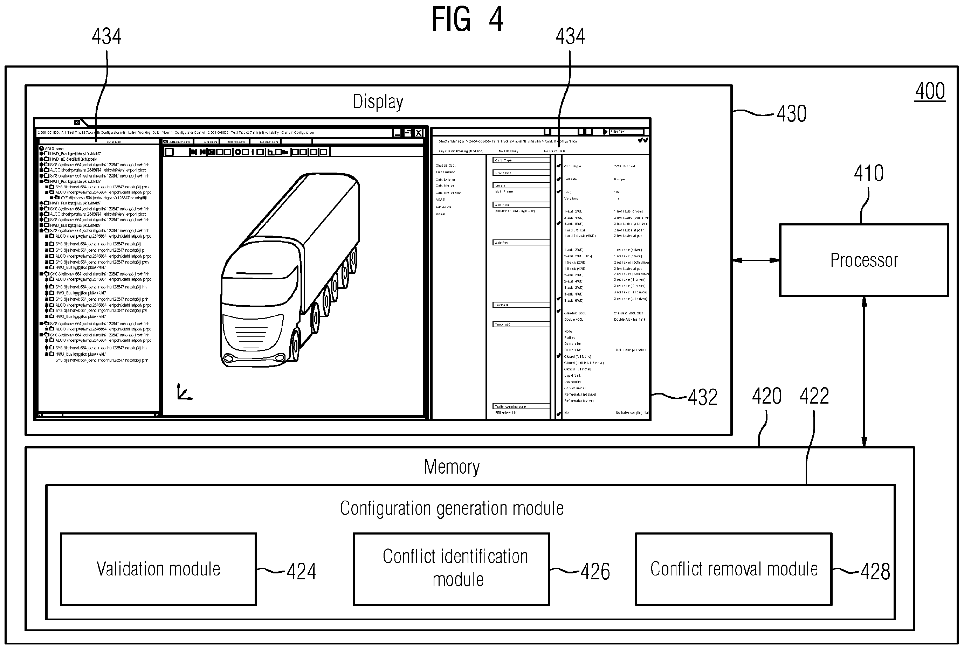

Fig. 4 illustrates a device 400 for configuring an automotive truck, according to an embodiment of the present invention. A person skilled in the art would appreciate that the device 400 can be implemented in a distributed computing environment such as a cloud computing platform. Accordingly, the device 400 in implementation may be several computing devices orchestrated to perform functions of the device 400.

The device 400 is also referred to as a configuration solver or a constraint solver. The device 400 comprises a processor 410 communicatively coupled to a memory unit 420 and a display 430. The memory includes one or more modules 422-428 comprising computer implemented instructions. The display 430 renders a User Interface (UI)/Graphical User Interface (GUI) 432. In a distributed computing environment, the processor 410 may be implemented on a remote server accessible via wired/wireless network. The memory unit 420 may be distributed with the modules 222-228 stored across multiple computing devices. Further, the display 430 may be part of a user computing device that may be a client server communicatively coupled to the remote server implementing the processor 410. A person skilled in the art would further appreciate that the display 430 may be implemented on a device supporting augmented reality to enable gesture-based interaction with the UI 432.

In operation, a configuration criteria is input or determined from a user input to the GUI 432. The processor 410 executes the instruction stored in the configuration generation module 422. On execution, the configuration generation module 422 is used to generate a configuration model for the automotive truck. The configuration model is illustrated on the GUI 432 with configuration features and constraints/rules illustrated in fields 434.
1. The configuration generation module 422 is configured to generate the configuration model by executing a validation module 424, a conflict identification module 426 and a conflict removal module 428. The validation module 424 is configured to validate the configuration criteria based on constraints associated with the automotive truck. For example, the constraints include rules indicated from R1-R13 in Fig. 3. The configuration criteria are valid when none of the constraints, having a severity level greater than or equal to a threshold severity, are violated. A set of rules are associable to the validated configuration criteria. Each of the set of rules are assigned the severity level and a sequence number and wherein the severity level and the sequence number define a ranking level for each of the rules.

After validating the configuration criteria, the conflict identification module 426 is configured to determine a minimum number of conflicting rules to be removed to resolve conflicts with the validated configuration criteria. The minimum number of conflicting rules are determined for rules ranked below the threshold severity. In an embodiment, the conflict identification module 426 is configured to identify conflicts in rules within each of the ranking level and across the ranking levels. Further, to determine the minimum number of conflicting rules as rules with lowest ranking level when conflicts across the ranking levels are identified.

In an embodiment, the conflict identification module 426 identifies conflicts within a specific ranking level, the conflict identification module 426 is configured to determine the conflicting rules based on the minimum number of the conflicting rules (n) to remove from within a specific ranking level to resolve all conflicts within the specific ranking level and/or ranking levels higher than the specific ranking level. Further, the conflict identification module 426 determines one or more combinations of the conflicting rules within the specific ranking level. Each of the one or more combinations include the minimum number of conflicting rules (n) and wherein removal of each of the combinations results in resolution of all the conflicts. Furthermore, the conflict identification module 426 is configured to generate a chain representation (E.g. chain representations 310 or 320) for the one or more combinations of conflicting rules as indicated in Fig.3.

The conflict removal module 428 is configured to remove the minimum number of conflicting rules to generate a maximum satisfiable rule set. In an embodiment, when the conflicts are identified across the ranking levels, the minimum number of conflicting rules as rules with lowest ranking level are removed. In another embodiment, when the conflicts are identified within the specified ranking level, the conflict removal module is configured to identify a combination (e.g. R7 and R9) of the combinations to be removed using the chain representation. The combination to be removed is identified as end points of the chain representation.

A person skilled in the art will appreciate that the automotive truck is merely an example of a technical system or product to be configured. The function and operation of the device 400 applies to all technical systems and products that have multiple configuration features.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art. Additionally, while the current disclosure describes the configuration tool 110 as an independent component, the configuration tool may be a software component and may be realized within a distributed control system or an engineering software suite. Additionally, in an embodiment, one or more parts of the engineering module may be realized within the technical system.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/device claims.

## Claims

1. A method of configuring a technical system comprising:
generating a configuration model (432) for technical system, wherein the configuration model (432) is generated from configuration criteria for the technical system and wherein the configuration model (432) represents the technical system as an information model and wherein the generating the configuration model (432) comprises:
validating the configuration criteria (F) based on constraints associated with the technical system, wherein the configuration criteria are valid when none of the constraints, having a severity level greater than or equal to a threshold severity, are violated;
identifying a maximum satisfiable rule set for the validated configuration criteria, wherein the maximum satisfiable rule set is either empty or comprises constraint rules and/or default rules, wherein the maximum satisfiable rule set is identified by:
determining a minimum number of conflicting rules (330) to be removed to resolve conflicts with the validated configuration criteria, wherein the minimum number of conflicting rules are determined for rules ranked below the threshold severity; and
removing at least one of the minimum number of conflicting rules (350) to generate the maximum satisfiable rule set.

2. The method according to claim 1, wherein a set of rules are associable to the validated configuration criteria, wherein each of the set of rules are assigned the severity level and a sequence number and wherein the severity level and the sequence number define a ranking level for each of the rules.

3. The method according to one of claim 1 and claim 2, further comprising:
associating each rule in the set of rules with the ranking level, wherein the ranking level of a specific rule is higher when the severity level is higher.

4. The method according to one of claim 2 and claim 3, wherein when the severity level is the same, the ranking level of the specific rule is based on the sequence number.

5. The method according to one of claim 2 and claim 3, wherein one or more rules of the set of rules are assignable with the same ranking level.

6. The method according to one of the preceding claims and particularly claim 1, wherein identifying a maximum satisfiable rule set for the validated configuration criteria, comprises:
identifying conflicts in rules within each of the ranking level and across the ranking levels;
determining the minimum number of conflicting rules (330) as rules with lowest ranking level when conflicts across the ranking levels are identified; and
removing the minimum number of conflicting rules.

7. The method according to one of claim 1 and claim 5, further comprising:
determining the conflicting rules based on the minimum number of the conflicting rules (330) to remove from within a specific ranking level to resolve all conflicts within the specific ranking level and/or ranking levels higher than the specific ranking level;
determining one or more combinations (340) of the conflicting rules within the specific ranking level, wherein each of the one or more combinations include the minimum number of conflicting rules (330) and wherein removal of each of the combinations results in resolution of all the conflicts; and
identifying a combination (350) of the combinations (340) to be removed using a chain representation (310, 320) of the one or more combinations, wherein the combination to be removed is identified as end points (R9-R7) of the chain representation (310, 320).

8. The method according to one of claim 1 and claim 7, wherein determining the minimum number of the conflicting rules to remove from within the specific ranking level comprises:
determining a cardinality (330) of conflicting rules within the specific ranking level, wherein the cardinality specifies the number of independent conflicts in the rules within the specific ranking level and wherein the minimum number of the conflicting rules that must be removed is the cardinality.

9. The method according to one of the preceding claims, further comprising:
identifying a next threshold ranking based on an interval search, wherein the next threshold ranking is identified as a highest ranking level below a current threshold ranking at which a conflict is identified, wherein the minimum number of conflicting rules are determined for the current threshold ranking and wherein ranking levels above the current threshold ranking are free of conflicts.

10. The method according to one of the preceding claims, further comprising:
removing rules in the set of rules when categorized based on a predefined category, wherein the predefined category comprises at least one of inactive, redundant, overruled and unjustified.

11. The method according to one of the preceding claim, further comprising:
adapting to updates in the set of rules by:
determining the ranking level for the updated set of rules; and
identifying the maximum satisfiable rule set for valid configuration criteria associated with the updated set of rules based on one or more method steps according to claims 1-10.

12. The method according to one of the preceding claims wherein the technical system is represented as an information model using the configuration model (432) and wherein the technical system is configured to comprise the constraints arrangeable based on the severity level.

13. A device for configuring a technical system, the device comprising:
a processor;
a memory communicatively coupled to the processor, the memory comprising a configuration generation module configured to generate a configuration model (432) of the technical system, wherein the configuration model (432) represents the technical system as an information model comprising constraints arrangeable based on the severity level according to one or more method steps disclosed in claims 1 to 12.

14. A computer program product comprising machine-readable instructions stored therein, that when executed by one or more processors, cause the one or more servers to perform a method according to claims 1 to 12.
